(19) Europäisches Patentamt
European Patent Office
Office européen des brevets

(11) **EP 2 341 642 B1**

(12) **EUROPEAN PATENT SPECIFICATION**

(45) Date of publication and mention
of the grant of the patent:
**20.05.2015 Bulletin 2015/21**

(51) Int Cl.:
**H04B 10/50** (2013.01)     **H04B 10/556** (2013.01)
**H04L 27/20** (2006.01)

(21) Application number: **10305008.4**

(22) Date of filing: **05.01.2010**

(54) **Method for transmitting data on an optical channel**

Verfahren zur Übertragung von Daten auf einem optischen Kanal

Procédé de transmission de données dans un canal optique

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**06.07.2011 Bulletin 2011/27**

(73) Proprietor: **ALCATEL LUCENT
92100 Boulogne-Billancourt (FR)**

(72) Inventors:
• **Renaudier, Jeremie
91620, NOZAY (FR)**

• **Salsi, Massimiliano
91620, NOZAY (FR)**

(74) Representative: **Sciaux, Edmond
Alcatel-Lucent International
148/152 route de la Reine
92100 Boulogne-Billancourt (FR)**

(56) References cited:
**EP-A1- 2 109 233**     **US-A1- 2004 264 599**
**US-A1- 2007 230 620**     **US-A1- 2009 324 253**

**Description**

**Field of the invention**

The invention relates to the technical field of optical communication systems.

**Background of the invention**

Optical propagation of modulated optical carrier waves in waveguides, e.g. optical fibers, makes it possible to transport information at a very high capacity over long distances. Various modulation methods can be used for that purpose. In particular, Phase-Shift Keying (PSK) techniques make it possible to generate optical signals that are robust to various physical impairments, even when a very high clock rate is used.

Optical modulators suitable for PSK modulation at a high rate include Mach-Zehnder modulators (MZM). With MZMs however, phase modulation comes together with field amplitude variations, so that resulting modulated optical signals have a varying intensity, especially data-dependent intensity fluctuations. Intensity variations of an optical signal propagating in a non-linear medium can induce further deformations of that signal through non-linear phenomena, e.g. Kerr effect. Offset Quadrature Phase-Shift-Keying (OQPSK) is a modified QPSK modulation scheme that attempts to reduce such non-linear induced deformations by preventing the intensity of a QPSK-modulated optical wave from dropping to zero.

EP-A-2109233 discloses an optical modulation apparatus implementing a POL-QAM modulation scheme for optical signals. The POL-QAM modulation scheme involves a first plurality of states of polarization on a single great circle on the Poincaré sphere and a second plurality of states of polarization outside the great circle to increase a symbol alphabet compared to PDM-QPSK modulation.

US-A-2004264599 discloses a modulator for a radio transmitter. In an embodiment, symbol phase rotation logic produces rotated in-phase data and rotated quadrature data, having phase transitions for sequentially adjacent phase symbols that have reduced zero crossings on a phase signal constellation map.

**Summary**

According to an embodiment, the invention provides a method for transmitting data on an optical channel, comprising:

> generating a plurality of baseband digital signals at a single symbol rate to represent a sequence of digital symbols, modulating a corresponding plurality of optical carrier wave components with the plurality of baseband digital signals, the modulation of the optical carrier wave components being done with Mach-Zehnder modulators, so as to generate 180°-phase transitions of each said optical carrier wave components in accordance with the corresponding binary baseband digital signal, and combining the modulated optical carrier wave components into a propagation medium, wherein the plurality of binary baseband signals are generated in a correlated manner so that at most a subset of the baseband digital signals makes a signal transition between each digital symbol and the subsequent digital symbol.

In embodiments, such a method may comprise one or more of the following features:

- the optical carrier wave components comprise a plurality of phase-shifted optical carrier wave components having a predetermined phase-difference. In particular, embodiments of the method may be applied to a variety of PSK modulation schemes, e.g. Ternary PSK, QPSK, N-ary PSK.
- the plurality of phase-shifted optical carrier wave components comprise an in-phase optical carrier wave component and a quadrature-phase optical carrier wave component.
- the optical carrier wave components comprise a first polarized optical carrier wave component and a second polarized optical carrier wave component orthogonal to the first polarized optical carrier wave component. In particular, embodiments of the method may be applied to a variety of modulation schemes using polarization division multiplexing, e.g. PDM-BPSK, PDM-QPSK and others.
- the optical carrier wave components comprise a plurality of first polarized phase-shifted optical carrier wave components having a predetermined phase-difference and a plurality of second polarized phase-shifted optical carrier wave components having a predetermined phase-difference, wherein the second polarized phase-shifted optical carrier wave components are orthogonal to the first polarized phase-shifted optical carrier wave components.
- a baseband digital signal is NRZ-coded, and the corresponding optical carrier wave component undergoes 180°-phase transitions in accordance with signal transitions of the NRZ-coded baseband digital signal.
- at most one of the baseband digital signals makes a signal transition between each digital symbol and the subsequent digital symbol. Thanks to this feature, two consecutive digital symbols differ in at most one bit.

Therefore, an intensity variation of the combined optical carrier wave between any two consecutive digital symbols can be limited.

- at least one of the baseband digital signals makes a signal transition between each digital symbol and the subsequent digital symbol. Thanks to this feature, two consecutive digital symbols are never identical one to the other, so that a detection sensitivity can be improved.
- one and only one of the baseband digital signals makes a signal transition between each digital symbol and the subsequent digital symbol. Thanks to this feature, an intensity variation of the combined optical carrier wave between any two consecutive digital symbols can be made uniform and independent of the transmitted data.
- The method further comprises converting a binary stream into the plurality of correlated baseband digital signals.
- the coding of the data is differential or direct.
- the converting comprises:

    differentially encoding the binary stream to generate a first one of the baseband digital signals,
    and XOR gating the first baseband digital signal with an alternating binary stream to generate a second one of the baseband digital signals.

- the differential encoding uses a one bit delay.
- the differential encoding uses a two bit delay.
- the modulation of the optical carrier wave components is done with Mach-Zehnder modulators or any other type of modulator that modifies the optical intensity at baseband signal transitions.
- the intensity envelope of the optical carrier wave components is preferably substantially continuous. Alternatively, it may be carved to form a sequence of optical pulses.

An optical channel designates an optical carrier suitable for conveying information from a transmitter to a receiver. The optical channel may take various forms. In embodiments, the optical channel may comprise one or more carrier frequencies in a WDM grid and/or one or more time slots in a periodical or non-periodical Time-Division Multiplexing (TDM) scheme.

According to an embodiment, the invention also provides a baseband signal generator for an optical modulation apparatus according to claim 14.

Further embodiments of such a baseband signal generator may comprise one or more of the following features:

    - - the digital encoding module comprises:

        a differential encoder to differentially encode the binary stream to generate a first one of the baseband digital signals,
        an alternating circuit for generating an alternating binary stream at the single symbol rate,
        and an XOR gate for combining the first baseband digital signal with the alternating binary stream to generate a second one of the baseband digital signals.

    - the differential encoder uses a one-bit delay or a two-bit delay.
    - the baseband digital signals are NRZ-coded.
    - at least one binary stream represents a sequence of digital words, wherein the digital encoding module is capable of uniquely pairing each code value of said digital words with a corresponding one of the digital baseband signals, wherein for each received digital word having a code value, the digital encoding module generates a signal transition of the digital baseband signal corresponding to said code value and generates the rest of the baseband digital signals to remain constant.
    - the digital encoding module is capable of converting a sequence of n-bit digital words at a single symbol rate into a sequence of 2n-bit digital symbols at the single symbol rate, wherein n is a positive integer number.

Aspects of the invention are based on the idea of limiting undesirable intensity variations of modulated optical waves, especially data-dependent intensity variations, by constraining available transitions between constellation points in a constellation diagram of the employed modulation scheme. Aspects of the invention are based on the idea of employing coding schemes adapted to that purpose, in particular adapted coding schemes that remain compatible with well-established modulation schemes, e.g. N-ary PSK or N-QAM, and corresponding well-established demodulation technology. Further aspects of the invention are based on the idea of generating modulated optical signals suitable for transporting data that have a nearly constant intensity envelope and/or a nearly uniform intensity variation pattern.

## Brief description of the drawings

These and other aspects of the invention will be apparent from and elucidated with reference to the embodiments described hereinafter, by way of example, with reference to the drawings.

Figure 1 is a schematic representation of an optical communication system in which embodiments can be used.
Figure 2 shows an embodiment of a QPSK optical transmitter, which can be used in the system of Figure 1.
Figure 3 shows a constellation diagram of an optical signal, which may be generated with the transmitter of Figure 2.
Figures 4 and 5 show two embodiments of baseband signal encoders, which can be used with the transmitter of Figure 2 or 7.
Figure 6 is a schematic representation of an optical receiver.
Figure 7 shows an embodiment of a PDM-BPSK optical transmitter, which can be used in the system of Figure 1.
Figure 8 shows an embodiment of a PDM-QPSK optical transmitter, which can be used in the system of Figure 1.
Figure 9 shows an embodiment of baseband signal encoder, which can be used with the transmitter of Figure 8.
Figure 10 shows an intensity envelope of transmitted optical signals, which can be generated with the transmitter of Figure 2 or 8.
Figures 11 and 12 are a schematic representation of a coherent optical receiver, which can be used in the system of Figure 1.

## Detailed description of the preferred embodiments

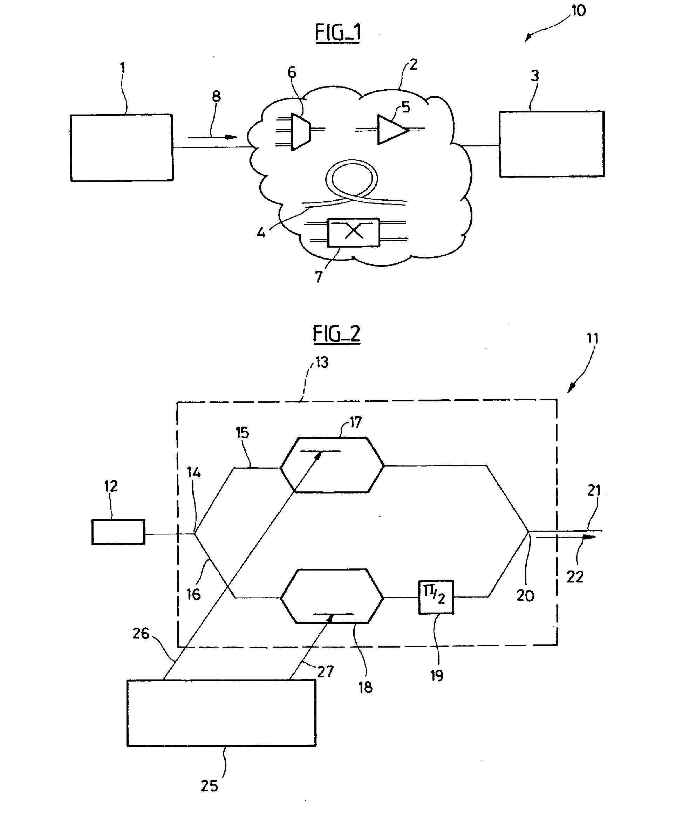

With reference to Fig. 1, an optical communication system 10 comprises an optical transmitter 1, an optical receiver 2 and an optical transmission path 3 that links transmitter 1 to receiver 2. Optical transmission path 3 may take various forms, e.g. merely an optical fiber 4 or a combination of various optical components in an optical network. Optical components that can serve to build a transmission path include e.g. optical amplifiers 5, optical filters or multiplexers 6, optical switches 7 and many others, as will be apparent to those skilled in the art of optical networks.

To transmit digital data to receiver 3, optical transmitter 1 generates a modulated optical signal 8 in accordance with a modulation method. In various embodiments that will be described below, the modulation method imposes 180°-phase transitions or phase jumps on a plurality of optical carrier waves that differ by some property i.e. carrier phase and/or polarization. Such phase jumps can be applied accurately by using a Mach-Zehnder modulator biased at a minimum point of a transfer curve and driven with a driving voltage of twice the switching voltage.

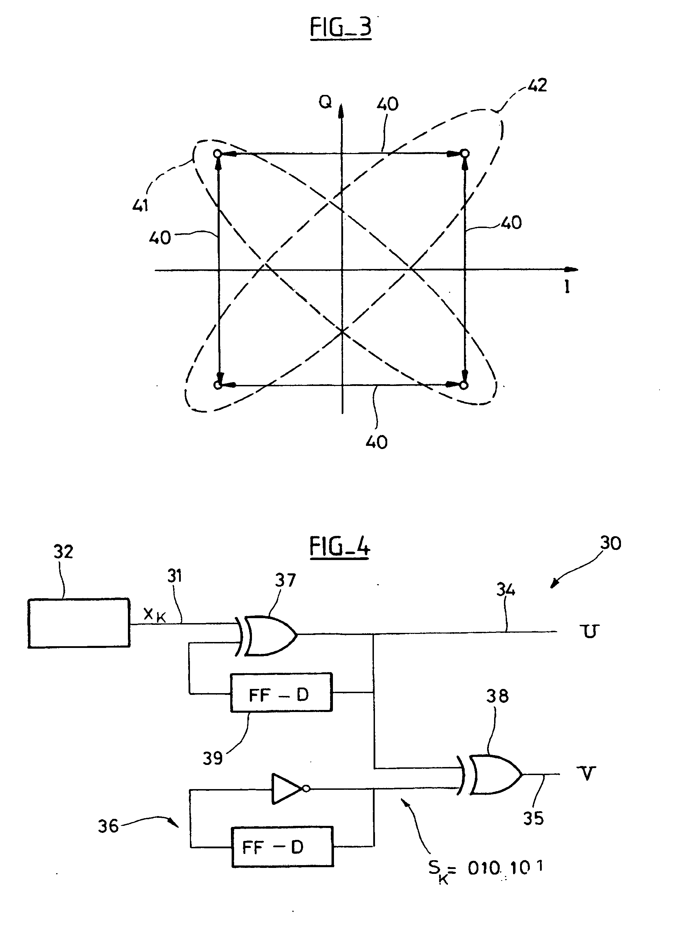

With reference to Fig.2, an embodiment in which the optical transmitter implements a QPSK modulation method will now be described. The QPSK transmitter 11 comprises a continuous wave laser source 12, a QPSK modulator 13 and an optical output 21. The QPSK modulator has a well-known structure. It comprises an optical coupler 14 to divide the carrier wave into two carrier wave components in branches 15 and 16, a respective MZM 17 and 18 to modulate the carrier wave component in each branch, a phase shifter 19 to shift the phase of the carrier wave component in one branch by 90° and an optical coupler 20 to superimpose the modulated carrier wave components into the output 21 to form a QPSK-modulated optical signal 22. The driving voltages for the MZM 17 and 18 are generated by a baseband signal generator 25 in the form of an NRZ-coded electrical signal 26 and an NRZ-coded electrical signal 27 at a given symbol rate, e.g. 20GHz. Baseband signals 26 and 27 are generated in a correlated manner to avoid some symbol transitions that cause strong variations in the intensity of optical signal 22. This will now be explained with reference to Fig. 3.

Fig. 3 shows a well-known constellation diagram of a QPSK-modulated signal, which comprises four constellation points representing four symbols 00, 01, 10 and 11. In QPSK transmitter 11, baseband signal generator 25 generates baseband signals 26 and 27 so that two diagonally opposed symbols are never generated in a consecutive manner. As a consequence, the symbol transitions 30 in the resulting QPSK-modulated optical signal 22 are limited to the four sides of the square and the intensity of the optical signal 22 cannot drop to zero due to any symbol transition.

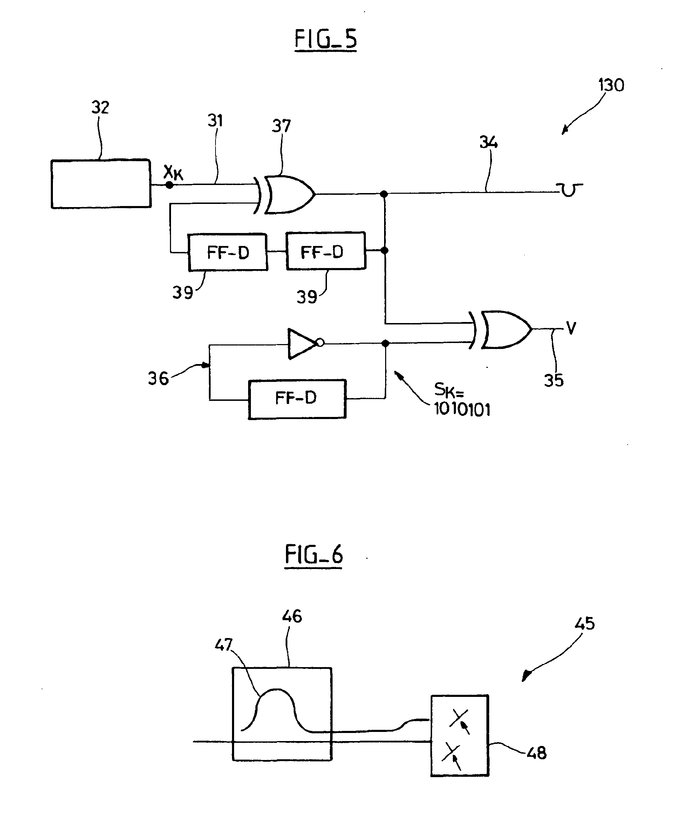

The constraint that two diagonally opposed symbols are never generated in a consecutive manner imposes a limitation on the number of available states of the signal at any point in time. Therefore, the data rate of the modulated signal 22 is lower than in a conventional QPSK modulation which encodes two bits per symbol. By contrast, with the modulated signal 22, it is only possible to transmit one and a half bit per symbol by allowing three states at each significant instant, or one bit per symbol by allowing only two states at each significant instant. The second possibility will now be illustrated with reference to Figs. 4 and 5.

Fig. 4 shows a digital encoder circuit 30 that can be used as a baseband signal generator. Digital encoder circuit 30 receives an NZR-coded binary signal X at an electrical input 31 from a source 32 and outputs two correlated NZR-coded binary signals U and V at electrical outputs 34 and 35. Digital encoder circuit 30 converts signal X into signals U and V by means of XOR gates 37 and 38, a shift register 39 to generate a 1-bit delayed copy of signal U and an alternating circuit 36 to generate an alternating electrical signal S. The alternating signal S has the effect of generating the successive QPSK symbols alternatively in two sub-constellations 41 and 42 of the QPSK constellation of Fig. 3. Table 1 further illustrates the logical operation of Digital encoder circuit 30.

Table 1: binary signals that may be generated by digital encoder 30.

| X | | 0 | 1 | 1 | 1 | 0 | 0 | 1 | 0 |
|---|---|---|---|---|---|---|---|---|---|
| U | 0 | 0 | 1 | 0 | 1 | 1 | 1 | 0 | 0 |
| S | 1 | 0 | 1 | 0 | 1 | 0 | 1 | 0 | 1 |
| V | 1 | 0 | 0 | 0 | 0 | 1 | 0 | 0 | 1 |

It is apparent in Table 1 that digital encoder circuit 30 generates a signal transition in U only for X=1 and a signal transition in V only for X=0. This ensures that U and V do not both undergo a signal transition at any given symbol, and also that either U or V undergoes a signal transition at every symbol in the sequence.

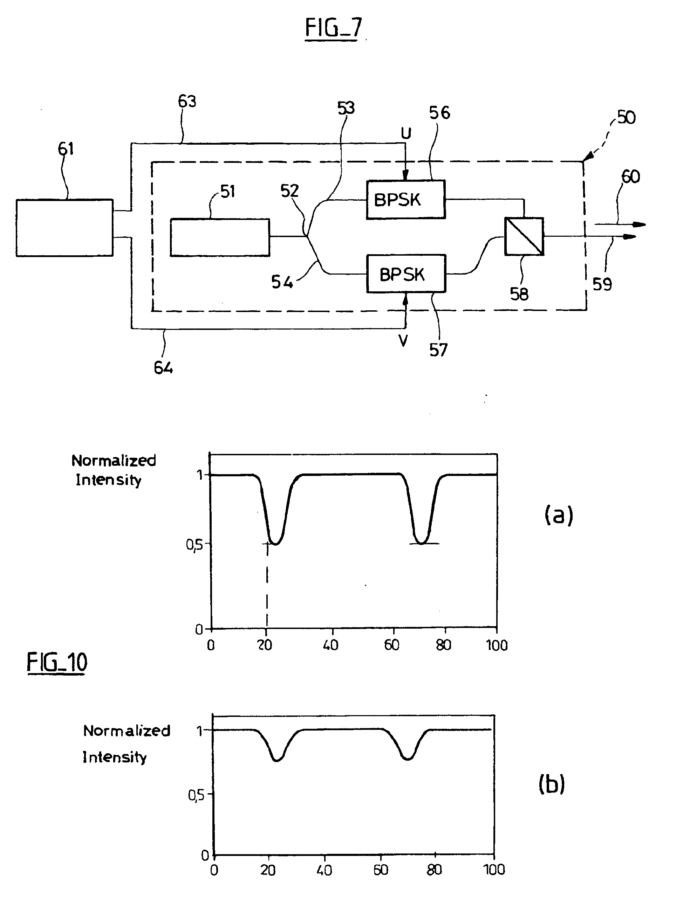

With reference to Fig. 2, signal U can serve as signal 26 and signal V can serve as signal 27. An eye diagram of a resulting QPSK-modulated optical signal 22 is shown on Fig. 10 (a). This optical signal has several advantageous properties:

- its intensity envelope varies within a very limited range, since the strongest drop in amplitude is ½. This property minimizes the impact of non-linear effects on the optical channel itself, i.e. self-phase modulation. It may also minimize the impact of non-linear effects on adjacent optical channels, i.e. cross-phase modulation.
- Its intensity envelope varies regularly and independently of the transmitted data, since a equal drop in amplitude is produced at each and every symbol transition. This property also contributes to reducing the impact of non-linear effects. It also makes it easier to predict, model and mitigate non-linearly induced signal distortions.

By way of comparison, it should be noted that a conventional NRZ-QPSK-modulated signal takes one of three different intensity levels at each symbol transition, i.e. 0, ½ or 1 depending on the data. Therefore, with the encoder circuit 30, a number of different intensity levels has been reduced from 3 to 1 and a maximum intensity variation has been reduced from 100% to 50%.

The QPSK-modulated optical signal generated with the encoder of Fig. 4 can be demodulated with a conventional QPSK receiver or a coherent receiver with digital signal processing. As every other QPSK symbol generated with digital encoder circuit 30 belongs to a given subconstellation 41 or 42, it is apparent that signals U and V comprise redundant information. In particular, symbols in subconstellation 41 satisfy U=not V and symbols in subconstellation 42 satisfy U=V. This property of the code can be used at the optical receiver 2 for maximum likelihood sequence detection or for transmission error correction.

Fig. 5 shows another digital encoder circuit 130 that can be used as a baseband signal generator. Elements that are identical to the elements of Fig. 4 are indicated by the same reference numeral. Digital encoder circuit 130 generates signal U by differential encoding of signal X with a 2-bit delay instead of the 1-bit delay in Fig. 4. Table 2 further illustrates the logical operation of Digital encoder circuit 130.

Table 2: binary signals that may be generated by digital encoder 130.

| X | | | 0 | 1 | 1 | 1 | 0 | 0 | 1 | 0 |
|---|---|---|---|---|---|---|---|---|---|---|
| U | 1 | 0 | 1 | 1 | 0 | 0 | 0 | 0 | 1 | 0 |
| S | 0 | 1 | 0 | 1 | 0 | 1 | 0 | 1 | 0 | 1 |
| V | 1 | 1 | 1 | 0 | 0 | 1 | 0 | 1 | 1 | 1 |

The QPSK-modulated optical signal generated with the encoder of Fig. 5 can be demodulated with a much simpler receiver. A suitable receiver 50 is schematically shown on Fig. 6. It comprises a delay line interferometer 46 with a 2-bit delay in one branch 47 and balanced photodiodes 48.

With reference to Fig. 7, an embodiment in which the optical transmitter implements a PDM-BPSK modulation method will now be described. The PDM-BPSK transmitter 50 comprises a continuous wave laser source 51, an optical coupler 52 to divide the carrier wave into two carrier wave components in branches 53 and 54, a respective MZM 56 and 57 to modulate the carrier wave component in each branch, and an polarization beam coupler 58 to superimpose a linearly polarized modulated carrier wave component from branch 53 and a linearly polarized modulated carrier wave component from branch 54 into the output 59 to form a PDM-BPSK-modulated optical signal 60. The two linearly polarized components are mutually orthogonal.

The driving voltages for the MZM 56 and 57 are generated by a baseband signal generator 61 in the form of an NRZ-coded electrical signal 63 and an NRZ-coded electrical signal 64 at a given symbol rate, e.g. 20GHz. Baseband signals 63 and 64 are generated in a correlated manner to avoid some symbol transitions that cause strong variations in the intensity of optical signal 60. In particular, the encoder circuits of Figs. 4 and 5 can be used to exclude symbol transitions that make both polarized components drop to zero intensity at the same time. The coded PDM-BPSK modulation produces similar benefits to the above-described coded-QPSK modulation, i.e. reduction of non-linear impairments.

The four significant states of the PDM-BPSK signal 60 could be represented as constellation points in a constellation diagram similar to Fig. 3. Such a constellation diagram has a different meaning however, since each axis would represent a linearly polarized field in that case.

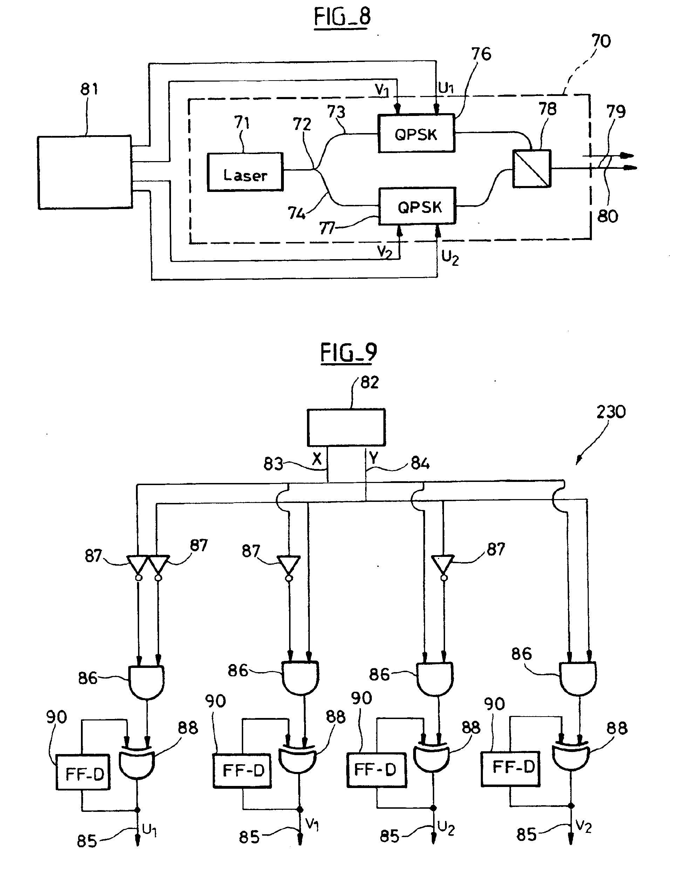

With reference to Fig. 8, an embodiment in which the optical transmitter implements a PDM-QPSK modulation method will now be described. The PDM-QPSK transmitter 70 comprises a continuous wave laser source 71, an optical coupler 72 to divide the carrier wave into two carrier wave components in branches 73 and 74, a respective QPSK modulator 76 and 77 to modulate the carrier wave component in each branch, and an polarization beam coupler 78 to superimpose a linearly polarized modulated carrier wave component from branch 73 and a linearly polarized modulated carrier wave component from branch 74 into the output 79 to form a PDM-QPSK-modulated optical signal 80. The two linearly polarized components are mutually orthogonal. The QPSK modulators 76 and 77 can be implemented as the modulator 13 of Fig. 2.

The driving voltages for the MZMs of QPSK modulators 76 and 77 are generated by a baseband signal generator 81 in the form of NRZ-coded electrical signals U1, V1, U2 and V2 at a given symbol rate, e.g. 20GHz. Baseband signals U1, V1, U2 and V2 are generated in a correlated manner to avoid some symbol transitions that cause strong variations in the intensity of optical signal 60.

In an embodiment, baseband signal generator 81 comprises two encoder circuits which generate the baseband signals for each polarized carrier wave component respectively. For example, the encoder circuits of Figs. 4 and 5 can be used to exclude symbol transitions that make the respective polarized component drop to zero intensity. In that embodiment, baseband signals U1 and V1 can be generated by a first encoder circuit from a first bit stream to be transmitted and baseband signals U1 and V1 can be generated by a second encoder circuit from a second, independent bit stream to be transmitted. Both encoder circuits should operate synchronously to avoid further complexities at the receiver side. Again, this embodiment reduces the intensity variation of the total optical signal to ½.

In another embodiment, the baseband signal generator 81 generates all four baseband digital signals in a correlated manner to achieve an even stronger reduction of the intensity variation at symbol transitions. In this embodiment, the digital encoder circuit 230 shown on Fig. 9 can be used.

Digital encoder circuit 230 comprises two electrical inputs 83 and 84 to receive two NZR-coded binary signals X and Y from a source 82 and four electrical outputs 85 to produce four correlated NZR-coded binary signals U1, V1, U2 and V2. All signals are coded at a single symbol rate, e.g. 20 GBaud. Signals X and Y comprise the data to be transmitted. Digital encoder circuit 30 converts signals X and Y into signals U1, V1, U2 and V2 by means of multipliers 86, reversers 87, XOR gates 88 and shift registers 90. The operation of encoder circuit 230 can be described by the following logical relations:

$$u1(k) = u1(k-1) \oplus \left( \bar{x}(k).\bar{y}(k) \right)$$

$$v1(k) = v1(k-1) \oplus \left( \bar{x}(k).y(k) \right)$$

$$u2(k) = u2(k-1) \oplus \left( x(k).\bar{y}(k) \right)$$

$$v2(k) = v2(k-1) \oplus \left( x(k).y(k) \right)$$

It will also be apparent that encoder circuit 230 differentially encodes a stream of 2-bit words XY into a stream of 4-bit symbols U1V1 U2V2 in a manner that maps every code value of the incoming words with a single bit transition in the outputted symbols. The unique pairing between the respective code values and the respective baseband signal to undergo a transition is shown in table 3.

Table 3: operations of digital encoder 230

| | | X | |
|---|---|---|---|
| | | 0 | 1 |
| Y | 0 | U1 | U2 |
| | 1 | V1 | V2 |

An eye diagram of a resulting PDM-QPSK-modulated optical signal 60 is shown on Fig. 10 (b). This optical signal has several advantageous properties:

- its intensity envelope varies within a very limited range, since the lowest point in normalized intensity is ¾. This property minimizes the impact of non-linear effects on the optical channel itself, i.e. self-phase modulation. It may also minimize the impact of non-linear effects on adjacent optical channels, i.e. cross-phase modulation.
- Its intensity envelope varies regularly and independently of the transmitted data, since a equal drop in amplitude is produced at each and every symbol transition. This property also contributes to reducing the impact of non-linear effects. It also makes it easier to predict, model and mitigate non-linearly induced signal distortions.

By way of comparison, it should be noted that a conventional NRZ-PDM-QPSK-modulated signal takes one of five different intensity levels at each symbol transition, i.e. 0, ¼, ½, ¾ or 1 depending on the data. Therefore, with the encoder circuit 230, a number of different intensity levels has been reduced from 5 to 1 and a maximum intensity variation has been reduced from 100% to 25%.

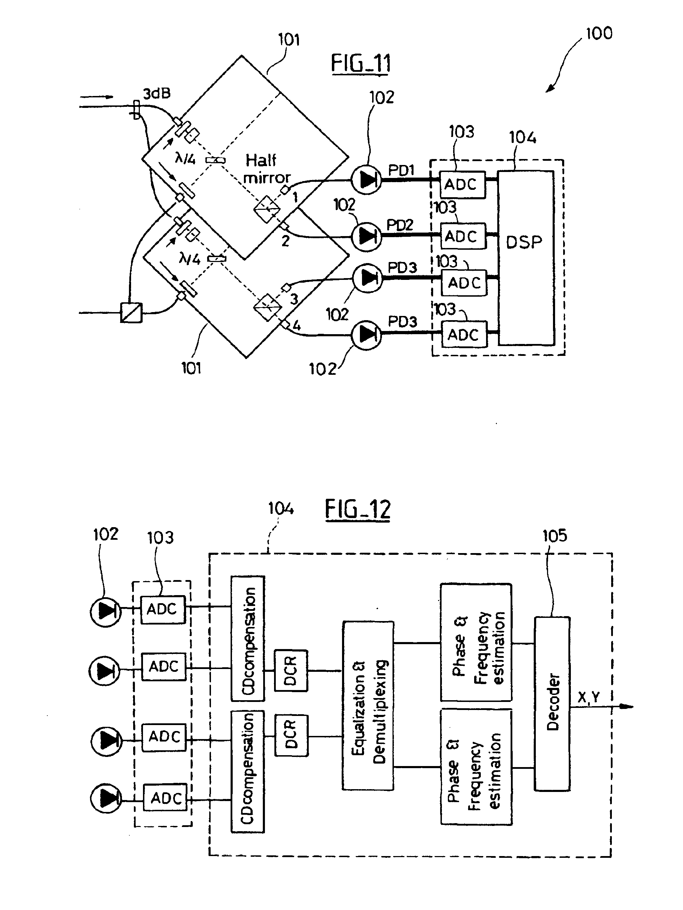

The PDM-QPSK-modulated optical signal generated with the encoder of Fig. 9 can be demodulated with a coherent receiver with digital signal processing. A suitable receiver is shown on Figs. 11 and 12.

Figure 11 is a high level functional view of a coherent receiver 100 that includes two coherent mixers 101, four photodiodes 102, four analog to digital converters 103 and a digital signal processor 104. Fig. 12 includes a more detailed functional representation of digital signal processor 104. The operation of coherent receiver 100 is for the most part known in the art, as disclosed e.g. in EP-A-2086158. To decode the data encoded with digital encoder circuit 230, an additional decoder module 105 must be inserted after the symbol decision module. In an embodiment, decoder module 105 reverses the logical mapping shown in table 3 to return the initial bit streams X and Y. Decoder module 105 can also include a maximum likelihood sequence estimator.

On Figs. 4, 5 and 9, the data sources 32 or 82 can comprise various elements, e.g. digital data storage, high speed memories, FEC coders and others. In an embodiment, the data to be transmitted at a high clock rate, e.g. 20 GHz, 40 GHz or 100 GHz comes from a plurality of tributaries at a lower clock rate, e.g. 10 GHz. A parallel-to-serial conversion circuit may be provided in the data source 32 or 82 for that purpose.

The above embodiments illustrate some modulation methods suitable for optical communications with or without Polarization Division Multiplexing (PDM). It will be apparent to those skilled in the art that these methods can be combined with Wavelength Division Multiplexing (WDM) to improve the transmission capacity of an optical communication system. While the above described embodiments provide various modulation methods, it will be apparent to those skilled in the art that transitions between constellation points can be constrained in a similar manner in many other modulation schemes so as to reduce and/or regularize intensity fluctuations of an optical signal, especially modulation schemes that combine both PSK and amplitude-shift keying (ASK), e.g. Quadrature Amplitude Modulation (QAM).

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method for transmitting data on an optical channel, comprising:

generating a plurality of binary baseband digital signals (26, 27, 63, 64, U, V, U1, V1, U2, V2) at a single symbol rate to represent a sequence of digital symbols,

modulating a corresponding plurality of optical carrier wave components with the plurality of binary baseband digital signals, the modulation of the optical carrier wave components being done with Mach-Zehnder modulators (17, 18), so as to generate 180°-phase transitions of each said optical carrier wave component in accordance with the corresponding binary baseband digital signal,

and combining the modulated optical carrier wave components into a propagation medium (2),

**characterized in that** the plurality of binary baseband digital signals are generated in a correlated manner so that at most a subset of the binary baseband digital signals makes a signal transition between each digital symbol and the subsequent digital symbol.

2. A method in accordance with claim 1, wherein the optical carrier wave components comprise a plurality of phase-shifted optical carrier wave components having a predetermined phase-difference.

3. A method in accordance with claim 2, wherein the plurality of phase-shifted optical carrier wave components comprise an in-phase optical carrier wave component and a quadrature-phase optical carrier wave component.

4. A method in accordance with any one of claims 1 to 3, wherein the optical carrier wave components comprise a first polarized optical carrier wave component and a second polarized optical carrier wave component orthogonal to the first polarized optical carrier wave component.

5. A method in accordance with claim 1, wherein the optical carrier wave components comprise a plurality of first polarized phase-shifted optical carrier wave components having a predetermined phase-difference and a plurality of second polarized phase-shifted optical carrier wave components having a predetermined phase-difference, wherein the second polarized phase-shifted optical carrier wave components are orthogonal to the first polarized phase-shifted optical carrier wave components.

6. A method in accordance with any one of claims 1 to 5, wherein a binary baseband digital signal is NRZ-coded, wherein the corresponding optical carrier wave component undergoes 180°-phase transitions in accordance with signal transitions of the NRZ-coded baseband digital signal.

7. A method in accordance with any one of claims 1 to 6, wherein at most one of the binary baseband digital signals makes a signal transition between each digital symbol and the subsequent digital symbol.

8. A method in accordance with any one of claims 1 to 6, wherein at least one of the binary baseband digital signals makes a signal transition between each digital symbol and the subsequent digital symbol.

9. A method in accordance with any one of claims 1 to 6, wherein one and only one of the binary baseband digital signals makes a signal transition between each digital symbol and the subsequent digital symbol.

10. A method in accordance with any one of claims 1 to 9, further comprising converting a binary stream (X, Y) into the plurality of correlated binary baseband digital signals (U, V, U1, V1, U2, V2).

11. A method in accordance with claim 10, wherein the converting comprises:

differentially encoding the binary stream to generate a first one (U) of the binary baseband digital signals, and XOR gating the first baseband digital signal with an alternating binary stream (S) to generate a second one (V) of the binary baseband digital signals.

12. A method in accordance with claim 11, wherein the differential encoding uses a two bit delay.

13. A method in accordance with any one of claims 1 to 12, wherein the Mach-Zehnder modulators (17, 18) are biased at a minimum point of a transfer curve and driven with a driving voltage of twice the switching voltage.

14. A baseband signal generator (25, 61, 81) for an optical modulation apparatus (13, 50, 70), the baseband signal generator com prising:

at least one electrical input (31, 83, 84) for receiving at least one binary stream,

a digital encoding module (30, 130, 230) for converting the at least one binary stream into a plurality of binary baseband digital signals (U, V, U1, V1, U2, V2) at a single symbol rate to represent a sequence of digital symbols, a plurality of electrical outputs (34, 35, 85) suitable for feeding the plurality of binary baseband digital signals to a corresponding plurality of Mach-Zehnder optical modulators (17, 18, 56, 57, 76, 77) to generate 180°-phase transitions of optical carrier wave components in accordance with the binary baseband digital signals, **characterized in that** the digital encoding module is capable of generating the plurality of binary baseband digital signals in a correlated manner, so that at most a subset of the binary baseband digital signals makes a signal transition between each digital symbol and the subsequent digital symbol of the sequence.

**15.** A baseband signal generator in accordance with claim 14, wherein the digital encoding module comprises:

a differential encoder (37, 39) to differentially encode the binary stream to generate a first one (U) of the binary baseband digital signals,
an alternating circuit (36) for generating an alternating binary stream at the single symbol rate,
and an XOR gate (38) for combining the first binary baseband digital signal with the alternating binary stream to generate a second one (V) of the binary baseband digital signals.

**16.** A baseband signal generator in accordance with claim 14 or 15, wherein the at least one binary stream (X, Y) represents a sequence of digital words, wherein the digital encoding module (30, 230) is capable of uniquely pairing each code value of said digital words with a corresponding one of the binary baseband digital signals (U, V, U1, V1, U2, V2), wherein for each received digital word having a code value, the digital encoding module generates a signal transition of the binary baseband digital signal corresponding to said code value and generates the rest of the binary baseband digital signals to remain constant.

**17.** A baseband signal generator in accordance with any one of claims 14 to 16, wherein the digital encoding module (30, 130, 230) is capable of converting a sequence of n-bit digital words at a single symbol rate into a sequence of $2^n$-bit digital symbols at the single symbol rate, wherein n is a positive integer number.

**Patentansprüche**

**1.** Verfahren zur Übertragung von Daten auf einem optischen Kanal, umfassend:

Erzeugen einer Vielzahl von digitalen binären Basisbandsignalen (26, 27, 63, 64, U, V, U1, V1, U2, V2) mit einer einzigen Symbolrate, um eine Folge von digitalen Symbolen darzustellen,
Modulieren einer entsprechenden Vielzahl von optischen Trägerwellenkomponenten mit der Vielzahl von digitalen binären Basisbandsignalen, wobei die Modulation der optischen Trägerwellenkomponenten anhand von Mach-Zehnder-Modulatoren (17, 18) erfolgt, um 180°-Phasenübergänge einer jeden der besagten optischen Trägerwellenkomponenten gemäß dem entsprechenden digitalen binären Basisbandsignal zu erzeugen,
und Kombinieren der modulierten optischen Trägerwellenkomponenten zu einem Ausbreitungsmedium (2), **dadurch gekennzeichnet, dass** die Vielzahl von digitalen binären Basisbandsignalen in korrelierter Weise erzeugt werden, so dass höchstens ein Teilsatz der digitalen binären Basisbandsignale einen Signalübergang zwischen jedem digitalen Symbol und dem nachfolgenden digitalen Symbol macht.

**2.** Verfahren nach Anspruch 1, wobei die optischen Trägerwellenkomponenten eine Vielzahl von phasenverschobenen optischen Trägerwellenkomponenten mit einer vorbestimmten Phasendifferenz umfassen.

**3.** Verfahren nach Anspruch 2, wobei die Vielzahl von phasenverschobenen optischen Trägerwellenkomponenten eine phasengleiche optische Trägerwellenkomponente und eine optische Quadraturphasen-Trägerwellenkomponente umfasst.

**4.** Verfahren nach einem beliebigen der Ansprüche 1 bis 3, wobei die optischen Trägerwellenkomponenten eine erste polarisierte optische Trägerwellenkomponente und eine zweite polarisierte optische Trägerwellenkomponente orthogonal zu der ersten polarisierten optischen Trägerwellenkomponente umfassen.

**5.** Verfahren nach Anspruch 1, wobei die optischen Trägerwellenkomponenten eine Vielzahl von ersten polarisierten phasenverschobenen optischen Trägerwellenkomponenten mit einer vorbestimmten Phasendifferenz und eine Vielzahl von zweiten polarisierten phasenverschobenen optischen Trägerwellenkomponenten mit einer vorbestimmten Phasendifferenz umfassen, wobei die zweiten polarisierten phasenverschobenen optischen Trägerwellenkomponenten orthogonal zu den ersten polarisierten phasenverschobenen optischen Trägerwellenkomponenten sind.

6. Verfahren nach einem beliebigen der Ansprüche 1 bis 5, wobei ein digitales binäres Basisbandsignal NRZ-codiert ist, wobei die entsprechende optische Trägerwellenkomponente 180°-Phasenübergängen gemäß den Signalübergängen des NRZ-codierten digitalen Basisbandsignals ausgesetzt ist.

7. Verfahren nach einem der Ansprüche 1 bis 6, wobei höchstens eines der digitalen binären Basisbandsignale einen Signalübergang zwischen jedem digitalen Symbol und dem nachfolgenden digitalen Symbol macht.

8. Verfahren nach einem beliebigen der Ansprüche 1 bis 6, wobei mindestens eines der digitalen binären Basisbandsignale einen Signalübergang zwischen jedem digitalen Symbol und dem nachfolgenden digitalen Symbol macht.

9. Verfahren nach einem beliebigen der Ansprüche 1 bis 6, wobei einzig und allein eines der digitalen binären Basisbandsignale einen Signalübergang zwischen jedem digitalen Symbol und dem nachfolgenden digitalen Symbol macht.

10. Verfahren nach einem beliebigen der Ansprüche 1 bis 9, weiterhin umfassend das Konvertieren eines binären Datenstroms (X, Y) in die Vielzahl von korrelierten digitalen binären Basisbandsignale (U, V, U1, V1, U2, V2).

11. Verfahren nach Anspruch 10, wobei das Konvertieren umfasst:

Differenzielles Codieren des binären Datenstroms, um ein erstes (U) der digitalen binären Basisbandsignale zu erzeugen,
und XOR-Gating des ersten digitalen Basisbandsignals mit einem abwechselnden binären Datenstrom (S), um ein zweites (V) der digitalen binären Basisbandsignale zu erzeugen.

12. Verfahren nach Anspruch 11, wobei die differenzielle Codierung eine Zwei-Bit-Verzögerung verwendet.

13. Verfahren nach einem beliebigen der Ansprüche 1 bis 12, wobei die Mach-Zehnder-Modulatoren (17, 18) an einem Minimalpunkt einer Transferkurve vorgespannt und mit einer Ansteuerspannung, welche doppelt so hoch ist wie die Schaltspannung, angesteuert werden.

14. Basisbandsignalgenerator (25, 61, 81) für eine optische Modulationsvorrichtung (13, 50, 70), wobei der Basisbandsignalgenerator umfasst:

Mindestens einen elektrischen Eingang (31, 83, 84) für den Empfang mindestens eines binären Datenstroms, ein digitales Codierungsmodul (30, 130, 230) zum Konvertieren des mindestens einen binären Datenstroms in eine Vielzahl von digitalen binären Basisbandsignalen (U, V, U1, V1, U2, V2) mit einer einzigen Symbolrate, um eine Folge von digitalen Symbolen darzustellen,
eine Vielzahl von elektrischen Ausgängen (34, 35, 85), die dazu ausgelegt sind, die Vielzahl von digitalen binären Basisbandsignalen in eine Vielzahl von optischen Mach-Zehnder-Modulatoren (17, 18, 56, 57, 76, 77) einzuspeisen, um 180°-Phasenübergänge von optischen Trägerwellenkomponenten gemäß den digitalen binären Basisbandsignalen zu erzeugen,
**dadurch gekennzeichnet, dass** das digitale Codierungsmittel fähig ist, die Vielzahl von digitalen binären Basisbandsignalen in korrelierter Weise zu erzeugen, so dass höchstens ein Teilsatz der digitalen binären Basisbandsignale einen Signalübergang zwischen jedem digitalen Symbol und dem nachfolgenden digitalen Symbol der Folge macht.

15. Basisbandsignalgenerator nach Anspruch 14, wobei das digitale Codierungsmodul umfasst:

Einen Differenzialcodierer (37, 39) zum differenziellen Codieren des binären Datenstroms, um ein erstes (U) der digitalen binären Basisbandsignale zu erzeugen,
eine wechselweise Schaltung (36) zum Erzeugen eines abwechselnden binären Datenstroms mit der einzigen Symbolrate,
und ein XOR-Gate (38) zum Kombinieren des ersten digitalen binären Basisbandsignals mit dem abwechselnden binären Datenstrom, um ein zweites (V) der digitalen binären Basisbandsignale zu erzeugen.

**16.** Basisbandsignalgenerator nach Anspruch 14 oder 15, wobei der mindestens eine binäre Datenstrom (X, Y) eine Folge von digitalen Wörtern darstellt, wobei das digitale Codierungsmodul (30, 230) fähig ist, jeden Codewert der besagten digitalen Wörter eindeutig mit einem entsprechenden der digitalen binären Basisbandsignale (U, V, U1, V1, U2, V2) zu paaren, wobei das digitale Codierungsmodul für jedes empfangene digitale Wort, welches einen Codewert aufweist, einen Signalübergang des dem besagten Codewert entsprechenden digitalen binären Basisbandsignals erzeugt und den Rest der digitalen binären Basisbandsignale dazu erzeugt, konstant zu bleiben.

**17.** Basisbandsignalgenerator nach einem beliebigen der Ansprüche 14 bis 16, wobei das digitale Codierungsmodul (30, 130, 230) fähig ist, eine Folge von digitalen n-Bit-Wörtern mit einer einzigen Symbolrate in eine Folge von digitalen $2^n$-Bit-Symbolen mit der einzigen Symbolrate zu konvertieren, wobei n eine positive ganze Zahl ist.

**Revendications**

**1.** Procédé de transmission de données sur un canal optique, comprenant les étapes suivantes :

générer une pluralité de signaux numériques en bande de base binaires (26, 27, 63, 64, U, V, U1, V1, U2, V2) à un débit de symboles unique pour représenter une séquence de symboles numériques,
moduler une pluralité correspondante de composantes d'onde porteuse optique avec la pluralité de signaux numériques en bande de base binaires, la modulation des composantes d'onde porteuse optique étant réalisée avec des modulateurs de Mach-Zehnder (17, 18), de sorte à générer des transitions de phase à 180° de chacune desdites composantes d'onde porteuse optique conformément au signal numérique en bande de base binaire correspondant,
et combiner les composantes d'onde porteuse optique modulées dans un milieu de propagation (2),
**caractérisé en ce que** la pluralité de signaux numériques en bande de base binaires sont générés de manière corrélée de sorte qu'au maximum un sous-ensemble des signaux numériques en bande de base binaires effectue une transition de signal entre chaque symbole numérique et le symbole numérique suivant.

**2.** Procédé selon la revendication 1, dans lequel les composantes d'onde porteuse optique comprennent une pluralité de composantes d'onde porteuse optique déphasées présentant une différence de phase prédéterminée.

**3.** Procédé selon la revendication 2, dans lequel la pluralité de composantes d'onde porteuse optique déphasées comprend une composante d'onde porteuse optique en phase et une composante d'onde porteuse optique en quadrature de phase.

**4.** Procédé selon l'une quelconque des revendications 1 à 3, dans lequel les composantes d'onde porteuse optique comprennent une première composante d'onde porteuse optique polarisée et une deuxième composante d'onde porteuse optique polarisée orthogonale à la première composante d'onde porteuse optique polarisée.

**5.** Procédé selon la revendication 1, dans lequel les composantes d'onde porteuse optique comprennent une pluralité de premières composantes d'onde porteuse optique déphasées polarisées présentant une différence de phase prédéterminée et une pluralité de deuxièmes composantes d'onde porteuse optique déphasées polarisées présentant une différence de phase prédéterminée, dans lequel les deuxièmes composantes d'onde porteuse optique déphasées polarisées sont orthogonales aux premières composantes d'onde porteuse optique déphasées polarisées.

**6.** Procédé selon l'une quelconque des revendications 1 à 5, dans lequel un signal numérique en bande de base binaire est codé NRZ, dans lequel la composante d'onde porteuse optique correspondante subit des transitions de phase à 180° conformément à des transitions de signal du signal numérique en bande de base codé NRZ.

**7.** Procédé selon l'une quelconque des revendications 1 à 6, dans lequel au maximum un des signaux numériques en bande de base binaires effectue une transition de signal entre chaque symbole numérique et le symbole numérique suivant.

**8.** Procédé selon l'une quelconque des revendications 1 à 6, dans lequel au moins un des signaux numériques en bande de base binaires effectue une transition de signal entre chaque symbole numérique et le symbole numérique suivant.

**9.** Procédé selon l'une quelconque des revendications 1 à 6, dans lequel un et seulement un des signaux numériques en bande de base binaires effectue une transition de signal entre chaque symbole numérique et le symbole numérique suivant.

**10.** Procédé selon l'une quelconque des revendications 1 à 9, comprenant en outre la conversion d'un flux binaire (X, Y) en la pluralité de signaux numériques en bande de base binaires corrélés (U, V, U1, V1, U2, V2).

**11.** Procédé selon la revendication 10, dans lequel la conversion comprend :

le codage différentiel du flux binaire pour générer un premier signal (U) parmi les signaux numériques en bande de base binaires,
et le portillonnage OU exclusif du premier signal numérique en bande de base avec un flux binaire alternatif (S) pour générer un deuxième signal (V) parmi les signaux numériques en bande de base binaires.

**12.** Procédé selon la revendication 11, dans lequel le codage différentiel utilise un retard à deux bits.

**13.** Procédé selon l'une quelconque des revendications 1 à 12, dans lequel les modulateurs de Mach-Zehnder (17, 18) sont polarisés à un point minimum d'une courbe de transfert et excités avec une tension d'excitation deux fois égale à la tension de commutation.

**14.** Générateur de signaux en bande de base (25, 61, 81) pour un appareil de modulation optique (13, 50, 70), le générateur de signaux en bande de base comprenant :

au moins une entrée électrique (31, 83, 84) pour recevoir au moins un flux binaire,
un module de codage numérique (30, 130, 230) pour convertir l'au moins un flux binaire en une pluralité de signaux numériques en bande de base binaires (U, V, U1, V1, U2, V2) à un débit de symboles unique pour représenter une séquence de symboles numériques, une pluralité de sorties électriques (34, 35, 85) permettant de délivrer la pluralité de signaux numériques en bande de base binaires à une pluralité correspondante de modulateurs optiques de Mach-Zehnder (17, 18, 56, 57, 76, 77) pour générer des transitions de phase à 180° de composantes d'onde porteuse optique conformément aux signaux numériques en bande de base binaires, **caractérisé en ce que** le module de codage numérique peut générer la pluralité de signaux numériques en bande de base binaires de manière corrélée, de sorte qu'au maximum un sous-ensemble des signaux numériques en bande de base binaires effectue une transition de signal entre chaque symbole numérique et le symbole numérique suivant de la séquence.

**15.** Générateur de signaux en bande de base selon la revendication 14, dans lequel le module de codage numérique comprend :

un codeur différentiel (37, 39) pour coder de manière différentielle le flux binaire afin de générer un premier signal (U) parmi les signaux numériques en bande de base binaires,
un circuit alternatif (36) pour générer un flux binaire alternatif au débit de symboles unique,
et une porte OU exclusif (38) pour combiner le premier signal numérique en bande de base binaire avec le flux binaire alternatif pour générer un deuxième signal (V) parmi les signaux numériques en bande de base binaires.

**16.** Générateur de signaux en bande de base selon la revendication 14 ou 15, dans lequel l'au moins un flux binaire (X, Y) représente une séquence de mots numériques, dans lequel le module de codage numérique (30, 230) peut associer de manière unique chaque valeur de code desdits mots numériques à un signal correspondant parmi les signaux numériques en bande de base binaires (U, V, U1, V1, U2, V2), dans lequel pour chaque mot numérique reçu présentant une valeur de code, le module de codage numérique génère une transition de signal du signal numérique en bande de base binaire correspondant à ladite valeur de code et génère le reste des signaux numériques en bande de base binaires pour rester constant.

**17.** Générateur de signaux en bande de base selon l'une quelconque des revendications 14 à 16, dans lequel le module de codage numérique (30, 130, 230) peut convertir une séquence de mots numériques à n bits à un débit de symboles unique en une séquence de symboles numériques à $2^n$ bits au débit de symboles unique, n étant un nombre entier positif.

FIG_1

FIG_2

## FIG_3

## FIG_4

14

## FIG_5

## FIG_6

## FIG_7

## FIG_10

(a)

(b)

# FIG_8

# FIG_9

FIG_11

FIG_12

**EP 2 341 642 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2109233 A
- US 2004264599 A

- EP 2086158 A